# EUROPEAN PATENT SPECIFICATION

(11) **EP 2 936 604 B1**
(45) Date of publication and mention of the grant of the patent: **04.07.2018**
(21) Application number: 13819057.4
(22) Date of filing: 17.12.2013
(51) Int. Cl.: H01M 8/247, H01M 8/248, H01M 8/2475

(54) **FUEL CELL STACK ASSEMBLY AND METHOD OF ASSEMBLY**
BRENNSTOFFZELLENSTAPELANORDNUNG UND MONTAGEVERFAHREN
ASSEMBLAGE D'EMPILEMENT DE PILES À COMBUSTIBLE ET PROCÉDÉ D'ASSEMBLAGE

(30) Priority: 21.12.2012 GB 201223318
(43) Date of publication of application: 28.10.2015
(73) Proprietor: Intelligent Energy Limited, Leicestershire LE11 3GB (GB)
(72) Inventor: HORLOCK, Mark, Phillip, Loughborough LE11 3GB (GB); KELLY, Andrew, Paul, Loughborough LE11 3GB (GB)
(74) Representative: Ahmad, Sheikh Shakeel
(86) International application number: PCT/GB2013/053323
(87) International publication number: WO 2014/096805

(56) References cited:
- EP-A1- 2 360 768
- EP-A2- 2 093 822
- WO-A2-02/37589
- JP-A- 2005 141 935
- US-A1- 2008 102 343

## Description

The present disclosure relates to fuel cell stack assemblies, and methods of assembling fuel cell stack assemblies.

Conventional electrochemical fuel cells convert fuel and oxidant, generally both in the form of gaseous streams, into electrical energy and a reaction product. A common type of electrochemical fuel cell for reacting hydrogen and oxygen comprises a polymeric ion (proton) transfer membrane, with fuel and air being passed over respective sides of the membrane. Protons (that is, hydrogen ions) are conducted through the membrane, balanced by electrons conducted through a circuit connecting the anode and cathode of the fuel cell. To increase the available voltage, a stack may be formed comprising a number of such membranes arranged with separate anode and cathode fluid flow paths. Such a stack is typically in the form of a block comprising numerous individual fuel cell plates held together by end plates at either end of the stack.

EP 2093822A2 discloses a fuel cell stack assembly including a fuel cell stack, a first pressure-supporting end plate assembly, a first current collector plate, a second pressure-supporting end plate assembly, a second current collector plate, and a pressure-applying structure.

The present invention is as set out in the appended claims.

In accordance with a first aspect of the invention there is provided a fuel cell stack assembly according to claim 1.

The bonding plane may be orthogonal to the plane of the fuel cells.

The lips may be co-planar with the side walls of the first encapsulation member.

The bonding plane may extend beyond the plane of the second end plate. The entire bonding plane may be beyond the plane of the second end plate.

The rims may be generally parallel with the lips. The lips may extend from the first end plate in the same direction that the corresponding rims extend from the second end plate.

The two side walls may extend from opposing edges of the first end plate. The two rims may extend from opposing edges of the second end plate.

The first end plate and the second end plate may each define a compression surface adjacent to, and in compressive relationship with, the one or more fuel cells. The first end plate and/or the second end plate may comprise a preformed element defining the compression surface. The preformed element may be configured with a predetermined curvature such that the compression surface is a convex surface when the preformed element is not under a load whereas, under the application of the load to maintain the fuel cells under compression, flexure of the preformed element may cause the compression surface to become a substantially planar surface.

One or more of the first encapsulation member, second encapsulation member, first end plate, or second end plate may comprise a port for communicating a fluid, which may be a liquid or a gas, to or from the one or more fuel cells.

According to a further aspect of the invention, there is provided a method of assembling a fuel cell stack assembly, according to claim 11.

Example methods of bonding include welding, brazing, soldering and other mechanical methods of connection, including use of an adhesive and application of a retaining clip.

A description is now given, by way of example only, with reference to the accompanying drawings, in which:
figure 1a illustrates an exploded side view of a fuel cell stack assembly;
figure 1b illustrates an exploded perspective view of first and second encapsulation members of the fuel cell stack assembly of figure 1a;
figure 1c illustrates side view of the fuel cell stack assembly of figure 1a when assembled;
figure 2 illustrates a side view of another fuel cell assembly not forming part of the present invention; and
figure 3 illustrates a method of assembling a fuel cell assembly.

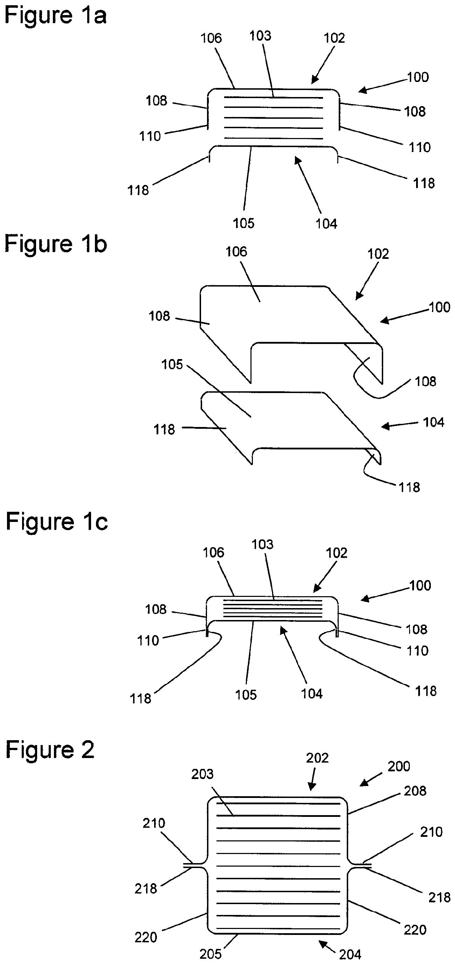

Figures 1a, 1b and 1c illustrate a fuel cell stack assembly 100 comprising a first encapsulation member 102 and a second encapsulation member 104 that are configured to engage with each other in order to apply a compression force to one or more fuel cells 103 located between the two encapsulation members 102, 104. The two encapsulation members 102, 104 may be made from stainless steel, and may be press-formed.

The first encapsulation member 102 comprises a first end plate 106 and two side walls 108 that extend transversely from, and at opposing ends of, the first end plate 106. The distal ends of the side walls 108 will be referred to as lips 110. In this example, the lips 110 are co-planar with the side walls 108, although this need not be the case in all examples.

The second encapsulation member 104 comprises a second end plate 105 and two rims 118 that extend transversely from, and at opposing ends of, the second end plate 105. The rims 118 of the second encapsulation member 104 are generally parallel to the lips 110 of the side walls 108 of the first encapsulation member 102 when the first and second end plates 106, 105 are parallel. Also, the rims 118 extend from the second end plate 105 in the same direction that the corresponding lips 110 extend from the first end plate 106.

The first encapsulation member 102 is shown positioned over, but not engaged with, the second encapsulation member 104 in figures 1a and 1b. The fuel cells are omitted from figure 1b for ease of illustration. In order for the first encapsulation member 102 to engage with the second encapsulation member 104, the first encapsulation member 102 may be moved towards the second encapsulation member 104 under the action of an external load. In the illustration of figures 1a and 1b, applying an external load to the first encapsulation member 102 causes the first encapsulation member 102 to move downwards. The first and second encapsulation members 102, 104 are biased towards each other until the fuel cells 103 are compressed to a working dimension or to a working load such that gaskets and seals associated with the fuel cells 103 can function correctly.

In this way, a compression force is applied to the fuel cells 103 in a direction that is normal to the plane of the fuel cells 103. The compressed fuel cells 103 exert an expansive force on the first and second end plates 106, 105 of the respective first and second encapsulation members 102, 104.

When the fuel cells are compressed to the extent desired, the lips 110 of the side walls 108 of the first encapsulation member 102 overlap with the rims 118 of the second encapsulation member 104, as shown in figure 1c, thereby defining two bonding planes. That is, the overlapping portions of the lips 110 and rims 118 are to be bonded together in order to maintain the compression of the fuel cells 103 when the external load is removed. For example, the lips 110 and rims 118 may be bonded together in order to maintain the compression of the fuel cells 103. When the lips 110 and rims 118 have been bonded together, the first encapsulation member 102 and the second encapsulation member 104 are retained in a fixed relative position. The fuel cells 103 are shown compressed in figure 1c.

The bonding planes extend away from the fuel cells 103, and beyond the plane of the second end plate 105. In this example the entire bonding plane is located beyond the plane of the second end plate 105. It can be advantageous for the bonding planes to extend away from the fuel cells 103 as, where the method of bonding is welding the heat used to perform the weld can be kept at a sufficient distance away from the fuel cells 103 such that likelihood of heat damage to the fuel cells 103 can be reduced.

In this example, the bonding planes extend away from the fuel cells 103 in a direction that is orthogonal to the plane of the fuel cells 103 and end plates 106, 105. This direction is also parallel to the direction of an expansive force provided by the fuel cells 103 on the end plates 106, 105. Examples in which the bonding planes extend away from the fuel cells 103 in a direction that is transverse to the plane of the fuel cells 103 cause the expansive force of the fuel cells 103 to be translated into a shear force between the lips 110 and the rims 118. This can be advantageous because only a small area of contact may be required to hold the assembly in place.

In some examples, the fuel cell stack assembly can be "built to load" such that the two encapsulation members 102, 104 are brought together until a desired loading force is applied to the fuel cells 103, which in some examples can be considered better than building a fuel cell stack assembly to a specific dimension. As applications for smaller fuel cell stacks become increasingly important, materials with a thinner gauge become particularly advantageous. However, if a fuel cell assembly is built to a set height, an overload may need to be applied to ensure that a sufficient compression force is applied to the fuel cells for all variations of the fuel cell dimensions that are within the tolerances of construction. Such overloading can cause buckling of thin components thereby compromising performance of the fuel cell stack. Therefore, fuel cell assemblies disclosed herein that can be built to a predetermined load instead of a predetermined height can reduce these problems.

In other applications, however, building to a desired dimension can be acceptable. In which case, the second encapsulation member 104 can be moved towards the first encapsulation member 102 until the fuel cells 103 are compressed to a desired dimension.

Providing a fuel cell assembly that uses a bonding plane such as those disclosed herein to retain the fuel cells in compression can be advantageous because the construction of such a fuel cell assembly may be simplified. An external load may simply be applied to the end plates 106, 105 in order to compress the fuel cells 103 to a desired load. A simple bonding operation, such as a welding operation, can then be performed to fix the two encapsulation members 102, 104 together. The overall addition to the size of the assembly due to the lips 110 and rims 118 can be relatively small.

Also, there may be a reduced variability in implementation of the fuel cell assembly compared with assemblies that use a spring clip, as the bond between the encapsulation members may not exert any force; it just resists the expansive force that is exerted on it.

Provision of a strong permanent mechanical joint between the bonding planes 110 of the first and second encapsulation members 102, 104 reduces the likelihood of loosening over time. Example methods of providing a permanent mechanical joint include welding, brazing and soldering.

Figure 2 illustrates another fuel cell assembly 200 not forming part of the present invention. Features of figure 2 that are shown in one of figures 1a to 1c are given corresponding reference numbers in the 200 series, and will not necessarily be described again here.

In this example, the lips 210 of the first encapsulation member 202 extend in directions that are orthogonal to the side walls 208. The second encapsulation member 204 also includes two side walls 220 that extend transversely from, and optionally at opposing ends of, the second end plate 205. The distal ends of the side walls 220 are the rims 218 of the second encapsulation member 204, which in this example, extend in directions that are orthogonal to the side walls 220 of the second encapsulation member 204. In this way, the associated bonding plane extends in a direction that is parallel to the plane of the fuel cells 203.

Fuel cell stack assemblies disclosed herein may have lips and rims that extend transverse to, orthogonally to, or at an oblique angle to, associated side walls.

It will be appreciated that in other examples the first encapsulation member may comprise side walls with corresponding lips that extend from more than two edges, in some cases all edges, of the first end plate. Similarly, the second encapsulation member may also comprise rims that extend from more than two edges, in some cases all edges, of the second end plate. In such an example, the number of bonding planes may be equal to the number of edges that have lips and rims.

Although not shown any of the drawings, it will be appreciated that either or both of the first and second encapsulation members may have a port through which a fluid can be communicated to or from the fuel cells. Such a fluid may be a liquid or a gas and can be fuel, air or coolant, for example.

In some examples, one or both of the first and second end plates comprise a preformed element configured with a predetermined curvature such that a surface of the end plate that contacts the fuel cells, which will be referred to as a compression surface, is a convex surface when the preformed element is not under load. When the lips and rims are bonded together to apply a load to the fuel cells, flexure of the preformed element between the two ends that are fixed in position relative to the side walls causes the compression surface to become a substantially planar surface.

In embodiments that use such preformed elements, each end plate is fabricated of a sufficiently stiff, but elastic material such that at the desired compressive loading of the fuel cells during assembly brings each unloaded convex compression face into a substantially planar disposition. Compression of the fuel cells is maintained by engagement between the lips and the rims of the first and second encapsulation members, which results in flexure of each of the end plates such that the compression faces of the respective end plates become both planar, and relatively parallel to one another, thereby imparting a correct uniform pressure on both end faces of the fuel cell stack. The thickness, stiffness and elastic deformability out-of-plane for each of the preformed end plates may be chosen to ensure that planar and uniform pressure is imparted to the fuel cells.

In summary, the expression "preformed" end plates is intended to indicate that the end plates exhibit a predetermined curvature under no load such that they will assume a flat and parallel relationship to one another at the required fuel cell stack assembly compression pressure. The predetermined curvature under no load may be chosen such that it allows for an initial break-in and settling of the stack assembly during assembly and commissioning. In a fuel cell stack assembly, there may be a short period before or during commissioning in which the stack compresses slightly, for example as a result of plastic deformation of layers such as the diffusion layer or various gaskets. The predetermined curvature of the end plates under no load may be configured to accommodate this such that they assume a flat and parallel relationship to one another after commissioning of the fuel cell stack.

Use of one or more such preformed end plates can enable a fuel cell assembly to be constructed to a desired load instead of a set height. As applications for smaller fuel cell stacks become increasingly important, materials with a thinner gauge become particularly advantageous. However, if a fuel cell assembly is built to a set height, an overload may need to be applied to ensure that a sufficient compression force is applied to the fuel cells for all variations of the fuel cell dimensions that are within the tolerances of construction. Such overloading can cause buckling of thin components thereby compromising performance of the fuel cell stack. Therefore, fuel cell assemblies disclosed herein that can be built to a predetermined load instead of a predetermined height can reduce these problems.

One or more of the examples disclosed herein can simplify known assembly methods for fuel cell stack assemblies, and can be suitable for mass manufacture. This can reduce assembly costs.

Fuel cell stack assemblies described in this document can be smaller than prior art assemblies, due to the locking members and the way they engage with the encapsulation members.

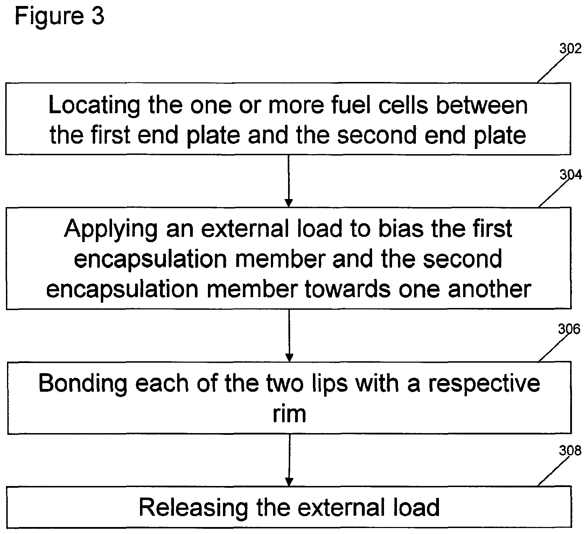

Figure 3 illustrates a method of assembling a fuel cell stack assembly.

The fuel cell stack assembly referred to in relation to figure 3 comprises:
a first encapsulation member comprising a first end plate and two side walls extending transversely from the first end plate, wherein the distal portion of each of the side walls comprise a lip;
a second encapsulation member comprising a second end plate and two rims; and
one or more fuel cells.

The method begins at step 302 by locating the one or more fuel cells between the first end plate and the second end plate.

At step 304, the method continues by applying an external load to bias the first end plate of the first encapsulation member and the second end plate of the second encapsulation member towards one another. This may involve applying a compression force to the one or more fuel cells. The one or more fuel cells may be compressed to a desired load.

The step 304 of applying an external load to the encapsulation members may not require that a desired compression level to be passed and then relaxed back to a fixed position that corresponds to the desired compression level. Instead, the maximum compression level applied may be fixed as the desired compression level without the need for over-compression. An advantage of such an approach is that the possibility of damage to thin and fragile components due to over compression can be reduced.

At step 306, the method comprises bonding each of the two lips with a respective rim to define a bonding plane that extends away from the one or more fuel cells. As bonding can take place at any point during compression of the assembly, a fine-controlled level of compression can be achieved and then maintained by performing bonding when the desired level of compression has been achieved.

Bonding the respective lips and rims together may also include bonding the first and/or second encapsulation member to another plate or plates that fix the fuel assembly to another assembly such as a chassis/housing of a product. The chassis may be bonded to the fuel cell assembly at the bonding plane. The fuel cell assembly may therefore be provided in a fixed position with the chassis without the need for additional fixings, such as clamps or screws, for example.

The fuel cell stack assembly is now assembled and, at step 308, the method concludes by releasing the external load, thereby providing a fuel cell stack assembly that retains the first end plate and the second end plate in a fixed relative position, and optionally retains the one or more fuel cells under compression.

An advantage of this method is that it can reduce variability in the implementation of the fuel cell assembly compared with assemblies that use a spring clip, as the engagement between the encapsulation members may not exert any force; engagement merely resist the expansive force that is exerted on it by the compressed fuel cells.

It will be appreciated that features described in regard to one example may be combined with features described with regard to another example, with the scope of the appended claims.

## Claims

1. A fuel cell stack assembly (100) comprising:
a first encapsulation member (102) comprising a first end plate (106) and two side walls (108) extending transversely from the first end plate, wherein the distal portion of each of the side walls comprises a lip (110);
a second encapsulation member (104) comprising a second end plate (105) and two rims (118); and
one or more fuel cells (103) located between the first end plate and second end plate;
wherein the first end plate of the first encapsulation member and the second encapsulation member are biased towards one another by an external load, thereby providing a compression of the one or more fuel cells to predetermined working load and each of the two lips corresponds with one of the two rims to define a bonding plane that extends away from the one or more fuel cells, wherein the lips are parallel with the respective rims and are thereby configured to enable bonding at any point during the compression of the one or more fuel cells, such that the bonding plane is configured to retain the first end plate and the second end plate in a fixed relative position to maintain the compression of the one or more fuel cells after the load is removed;
wherein the two rims (118) extend transversely from the second end plate (105) and the bonding plane extends in a direction that is transverse to the plane of the fuel cells (103).

2. The fuel cell stack assembly (100) of claim 1, wherein the bonding plane is orthogonal to the plane of the fuel cells (103).

3. The fuel cell stack assembly (100) of any preceding claim, wherein the lips (110) are co-planar with the side walls (108) of the first encapsulation member (102).

4. The fuel cell stack assembly (100) of any preceding claim, wherein the bonding plane extends beyond the plane of the second end plate (105).

5. The fuel cell stack assembly (100) of claim 4, wherein the entire bonding plane is beyond the plane of the second end plate (105)

6. The fuel cell stack assembly (100) of any preceding claim, wherein the lips (100) extend from the first end plate (106) in the same direction that the corresponding rims (118) extend from the second end plate (105).

7. The fuel cell stack assembly (100) of any preceding claim, wherein the two side walls (108) extend from opposing edges of the first end plate (106).

8. The fuel cell stack assembly (100) of any preceding claim, wherein the two rims (118) extend from opposing edges of the second end plate (105).

9. The fuel cell stack assembly (100) of any preceding claim, wherein the first end plate (106) and the second end plate (105) each define a compression surface adjacent to, and in compressive relationship with, the one or more fuel cells (103); and
the first end plate and/or the second end plate comprise a preformed element defining the compression surface, the preformed element being configured with a predetermined curvature such that the compression surface is a convex surface when the preformed element is not under a load whereas, under the application of the load to maintain the fuel cells under compression, flexure of the preformed element causes the compression surface to become a substantially planar surface.

10. The fuel cell stack assembly (100) of any preceding claim, wherein the first encapsulation member (102) and/or the second encapsulation member (104) comprise a port for communicating a fluid to, or from, the one or more fuel cells (103).

11. A method of assembling a fuel cell stack assembly, the fuel cell stack assembly comprising:
a first encapsulation member comprising a first end plate and two side walls extending transversely from the first end plate, wherein the distal portion of each of the side walls comprise a lip;
a second encapsulation member comprising a second end plate and two rims; and
one or more fuel cells;
the method comprising:
locating (302) the one or more fuel cells between the first end plate and the second end plate;
applying (304) an external load to bias the first end plate of the first encapsulation member and the second end plate of the second encapsulation member towards one another thereby providing a compression of the one or more fuel cells to a predetermined working load; bonding (306) each of the two lips with a respective rim to define a bonding plane that extends away from the one or more fuel cells; the two rims (118) extend transversely from the second end plate (105) and the bonding plane extends in a direction that is transverse to the plane of the fuel cells (103); and,
releasing (308) the external load, thereby providing a fuel cell stack assembly that retains the first end plate and the second end plate in a fixed relative position to maintain the compression of the one or more fuel cells.

## Patentansprüche

1. Brennstoffzellenstapelanordnung (100), umfassend:
ein erstes Verkapselungselement (102), das eine erste Endplatte (106) und zwei Seitenwände (108) aufweist, die sich quer von der ersten Endplatte erstrecken, wobei der distale Abschnitt jeder der Seitenwände einen Falz (110) aufweist;
ein zweites Verkapselungselement (104), das eine zweite Endplatte (105) und zwei Ränder (118) umfasst; und
eine oder mehrere Brennstoffzellen (103), die zwischen der ersten Endplatte und der zweiten Endplatte angeordnet sind;
wobei die erste Endplatte des ersten Verkapselungselements und das zweite Verkapselungselement durch eine äußere Last gegeneinander vorgespannt sind, wodurch eine Kompression der einen oder mehreren Brennstoffzellen auf eine vorbestimmte Arbeitslast bereitgestellt wird und jede der beiden Falze mit einem der beiden Ränder zusammenwirkt, um eine Verbindungsebene zu begrenzen, die sich von der einen oder den mehreren Brennstoffzellen weg erstreckt, wobei die Falze parallel zu den jeweiligen Rändern sind und dadurch so ausgelegt sind, dass sie eine Verbindung an einem beliebigen Punkt während der Kompression der einen oder mehreren Brennstoffzellen ermöglichen, sodass die Verbindungsebene so ausgelegt ist, dass sie die erste Endplatte und die zweite Endplatte in einer festen relativen Position hält, um die Kompression der einen oder mehreren Brennstoffzellen nach Entfernen der Last aufrechtzuerhalten;
wobei sich die beiden Ränder (118) quer von der zweiten Endplatte (105) erstrecken und sich die Verbindungsebene in einer Richtung erstreckt, die quer zur Ebene der Brennstoffzellen (103) verläuft.

2. Brennstoffzellenstapelanordnung (100) nach Anspruch 1, wobei die Verbindungsebene senkrecht zur Ebene der Brennstoffzellen (103) angeordnet ist.

3. Brennstoffzellenstapelanordnung (100) nach einem der vorangehenden Ansprüche, wobei die Falze (110) mit den Seitenwänden (108) des ersten Verkapselungselements (102) koplanar sind.

4. Brennstoffzellenstapelanordnung (100) nach einem der vorangehenden Ansprüche, wobei sich die Verbindungsebene über die Ebene der zweiten Endplatte (105) hinaus erstreckt.

5. Brennstoffzellenstapelanordnung (100) nach Anspruch 4, wobei die gesamte Verbindungsebene außerhalb der Ebene der zweiten Endplatte (105) liegt.

6. Brennstoffzellenstapelanordnung (100) nach einem der vorangehenden Ansprüche, wobei sich die Falze (100) von der ersten Endplatte (106) in die gleiche Richtung erstrecken wie sich die entsprechenden Ränder (118) von der zweiten Endplatte (105) erstrecken.

7. Brennstoffzellenstapelanordnung (100) nach einem der vorangehenden Ansprüche, wobei sich die beiden Seitenwände (108) von gegenüberliegenden Kanten der ersten Endplatte (106) erstrecken.

8. Brennstoffzellenstapelanordnung (100) nach einem der vorangehenden Ansprüche, wobei sich die beiden Ränder (118) von gegenüberliegenden Kanten der zweiten Endplatte (105) erstrecken.

9. Brennstoffzellenstapelanordnung (100) nach einem der vorangehenden Ansprüche, wobei die erste Endplatte (106) und die zweite Endplatte (105) jeweils eine an die eine oder mehreren Brennstoffzellen (103) angrenzende und mit diesen in Druckbeziehung stehende Kompressionsfläche begrenzen; und
die erste Endplatte und/oder die zweite Endplatte ein vorgeformtes Element umfassen, das die Kompressionsfläche begrenzt, wobei das vorgeformte Element mit einer vorgegebenen Krümmung derart konfiguriert ist, dass die Kompressionsfläche eine konvexe Oberfläche ist, wenn das vorgeformte Element nicht unter einer Last steht, während unter Anwendung der Last, um die Brennstoffzellen unter Druck zu halten, die Biegung des vorgeformten Elements bewirkt, dass die Kompressionsfläche eine im Wesentlichen ebene Oberfläche wird.

10. Brennstoffzellenstapelanordnung (100) nach einem der vorangehenden Ansprüche, wobei das erste Verkapselungselement (102) und/oder das zweite Verkapselungselement (104) einen Anschluss zum Übertragen eines Fluids zu oder von der einen oder den mehreren Brennstoffzellen (103) aufweisen.

11. Verfahren zum Zusammenbau einer Brennstoffzellenstapelanordnung, wobei die Brennstoffzellenstapelanordnung umfasst:
ein erstes Verkapselungselement, umfassend eine erste Endplatte und zwei Seitenwände, die sich quer von der ersten Endplatte erstrecken, wobei der distale Abschnitt jeder der Seitenwände einen Falz umfasst;
ein zweites Verkapselungselement mit einer zweiten Endplatte und zwei Rändern; und eine oder mehrere Brennstoffzellen;
wobei das Verfahren umfasst:
Platzieren (302) der einen oder mehrere Brennstoffzellen zwischen der ersten Endplatte und der zweiten Endplatte;
Aufbringen (304) einer äußeren Last, um die erste Endplatte des ersten Verkapselungselements und die zweite Endplatte des zweiten Verkapselungselements gegeneinander vorzuspannen, wodurch eine Kompression der einen oder mehreren Brennstoffzellen auf eine vorbestimmte Arbeitslast bereitgestellt wird; Verbinden (306) jedem der beiden Falze mit einem entsprechenden Rand, um eine Verbindungsebene zu begrenzen, die sich von der einen oder den mehreren Brennstoffzellen weg erstreckt; wobei sich die beiden Ränder (118) quer von der zweiten Endplatte (105) erstrecken und sich die Verbindungsebene in eine Richtung erstreckt, die quer zu der Ebene der Brennstoffzellen (103) liegt; und
Lösen (308) der äußeren Last, wodurch eine Brennstoffzellenstapelanordnung bereitgestellt wird, die die erste Endplatte und die zweite Endplatte in einer festen relativen Position hält, um die Kompression der einen oder mehreren Brennstoffzellen aufrechtzuerhalten.

## Revendications

1. Ensemble d'empilement de piles à combustible (100) comprenant :
un premier élément d'encapsulation (102) comprenant une première plaque d'extrémité (106) et deux parois latérales (108) s'étendant transversalement à partir de la première plaque d'extrémité, la partie distale de chacune des parois latérales comprenant une lèvre (110) ;
un second élément d'encapsulation (104) comprenant une seconde plaque d'extrémité (105) et deux rebords (118) ; et
une ou plusieurs piles à combustible (103) située(s) entre la première plaque d'extrémité et la deuxième plaque d'extrémité ;
dans lequel la première plaque d'extrémité du premier élément d'encapsulation et le deuxième élément d'encapsulation sont sollicités l'une vers l'autre par une charge externe, appliquant ainsi une compression de la ou des piles à combustible sur une charge de travail prédéterminée et chacune des deux lèvres correspond à un des deux rebords pour définir un plan de liaison qui s'étend depuis la ou les piles à combustible, les lèvres étant parallèles aux rebords respectifs et étant configurées de la sorte pour permettre la liaison sur n'importe quel point durant la compression de la ou des piles à combustible, de sorte que le plan de liaison soit configuré pour retenir la première plaque d'extrémité et la seconde plaque d'extrémité dans une position relative fixe pour maintenir la compression de la ou des piles à combustible après que la charge est retirée ;
dans lequel les deux rebords (118) s'étendent transversalement à partir de la seconde plaque d'extrémité (105) et le plan de liaison s'étend dans une direction qui est transversale par rapport au plan des piles à combustible (103).

2. Ensemble d'empilement de piles à combustible (100) selon la revendication 1, dans lequel le plan de liaison est perpendiculaire au plan des piles à combustible (103).

3. Ensemble d'empilement de piles à combustible (100) selon l'une quelconque des revendications précédentes, dans lequel les lèvres (110) sont sur le même plan que les parois latérales (108) du premier élément d'encapsulation (102).

4. Ensemble d'empilement de piles à combustible (100) selon l'une quelconque des revendications précédentes, dans lequel le plan de liaison s'étend au-delà du plan de la seconde plaque d'extrémité (105).

5. Ensemble d'empilement de piles à combustible (100) selon la revendication 4, dans lequel le plan de liaison entier est au-delà du plan de la seconde plaque d'extrémité (105).

6. Ensemble d'empilement de piles à combustible (100) selon l'une quelconque des revendications précédentes, dans lequel les lèvres (100) s'étendent à partir de la première plaque d'extrémité (106) dans la même direction d'extension que les rebords (118) correspondants à partir de la seconde plaque d'extrémité (105).

7. Ensemble d'empilement de piles à combustible (100) selon l'une quelconque des revendications précédentes, dans lequel les deux parois latérales (108) s'étendent à partir de bords opposés de la première plaque d'extrémité (106).

8. Ensemble d'empilement de piles à combustible (100) selon l'une quelconque des revendications précédentes, dans lequel les deux rebords (118) s'étendent à partir de bords opposés de la seconde plaque d'extrémité (105).

9. Ensemble d'empilement de piles à combustible (100) selon l'une quelconque des revendications précédentes, dans lequel la première plaque d'extrémité (106) et la seconde plaque d'extrémité (105) définissent chacune une surface de compression à côté de, et en relation de compression avec, la ou les piles à combustible (103) ; et
la première plaque d'extrémité et/ou la seconde plaque d'extrémité comprend/comprennent un élément préformé définissant la surface de compression, l'élément préformé étant configuré avec une courbure prédéterminée de sorte que la surface de compression soit une surface convexe lorsque l'élément préformé n'est pas soumis à une charge alors que, lors de l'application de la charge pour maintenir les piles à combustible sous l'effet d'une compression, la flexion de l'élément préformé a pour effet de rendre la surface de compression sensiblement plane.

10. Ensemble d'empilement de piles à combustible (100) selon l'une quelconque des revendications précédentes, dans lequel le premier élément d'encapsulation (102) et/ou le second élément d'encapsulation (104) comprend/comprennent un orifice permettant le transfert d'un fluide vers, ou depuis, la ou les piles à combustible (103).

11. Procédé d'assemblage d'un ensemble d'empilement de piles à combustible, l'ensemble d'empilement de piles à combustible comprenant :
un premier élément d'encapsulation comprenant une première plaque d'extrémité et deux parois latérales s'étendant transversalement à partir de la première plaque d'extrémité, la partie distale de chacune des parois latérales comprenant une lèvre ;
un second élément d'encapsulation comprenant une seconde plaque d'extrémité et deux rebords ; et une ou plusieurs piles à combustible ;
le procédé comprenant :
la localisation (302) de la ou des piles à combustible entre la première plaque d'extrémité et la seconde plaque d'extrémité ;
l'application (304) d'une charge externe pour solliciter la première plaque d'extrémité du premier élément d'encapsulation et la seconde plaque d'extrémité du second élément d'encapsulation l'une vers l'autre appliquant ainsi une compression de la ou des piles à combustible sur une charge de travail prédéterminée ; la liaison (306) de chacune des deux lèvres à un rebord respectif pour définir un plan de liaison qui s'étend depuis la ou les piles à combustible ; les deux rebords (118) s'étendent transversalement à partir de la seconde plaque d'extrémité (105) et le plan de liaison s'étend dans une direction qui est transversale par rapport au plan des piles à combustible (103) ; et,
la libération (308) de la charge externe, fournissant ainsi un ensemble d'empilement de piles à combustible qui retient la première plaque d'extrémité et la seconde plaque d'extrémité dans une position relative fixe pour maintenir la compression de la ou des piles à combustible.
